# EUROPEAN PATENT SPECIFICATION

(11) **EP 4 151 106 B1**
(45) Date of publication and mention of the grant of the patent: **16.04.2025**
(21) Application number: 21196992.8
(22) Date of filing: 15.09.2021
(51) Int. Cl.: A24F 40/50, A24F 40/65, H02J 7/00, A24F 40/90

(54) **PORTABLE CHARGER AND AEROSOL DELIVERY DEVICE**
TRAGBARES LADEGERÄT UND AEROSOLABGABEVORRICHTUNG
CHARGEUR PORTABLE ET DISPOSITIF DE DISTRIBUTION D'AÉROSOLS

(43) Date of publication of application: 22.03.2023
(73) Proprietor: Imperial Tobacco Limited, Bristol, BS3 2LL (GB)
(72) Inventor: MARCHBANK, Jonathan, Speke, Liverpool, L24 9HP (GB); SUDLOW, Thomas, Speke, Liverpool, L24 9HP (GB); THOMAS, David, Speke, Liverpool, L24 9HP (GB); TALBOT, Oliver, Speke, Liverpool, L24 9HP (GB)
(74) Representative: Mewburn Ellis LLP

(56) References cited:
- EP-A1- 3 750 420
- WO-A1-2021/116456
- WO-A1-2021/122693
- US-A1- 2020 077 699
- US-A1- 2020 077 700
- US-A1- 2021 007 406

## Description

### Technical field

The present disclosure relates to portable charger and to an aerosol delivery system having the portable charger.

### Background

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Combustion of organic material such as tobacco is known to produce tar and other potentially harmful by-products. There have been proposed various aerosol delivery devices in order to avoid the smoking of tobacco.

Such aerosol delivery devices can form part of nicotine replacement therapies aimed at people who wish to stop smoking and overcome a dependence on nicotine.

Aerosol delivery devices, which may also be known as electronic nicotine delivery devices, may comprise electronic systems that permit a user to simulate the act of smoking by producing an aerosol, also referred to as a "vapour", which is drawn into the lungs through the mouth (inhaled) and then exhaled. The inhaled aerosol typically bears nicotine and/or flavourings without, or with fewer of, the odour and health risks associated with traditional smoking.

In general, aerosol delivery devices are intended to provide a substitute for the rituals of smoking, whilst providing the user with a similar experience and satisfaction to those experienced with traditional smoking and tobacco products.

The popularity and use of aerosol delivery devices has grown rapidly in the past few years. Although originally marketed as an aid to assist habitual smokers wishing to quit tobacco smoking, consumers are increasingly viewing aerosol delivery devices as desirable lifestyle accessories. Some aerosol delivery devices are designed to resemble a traditional cigarette and are cylindrical in form with a mouthpiece at one end. Other aerosol delivery devices do not generally resemble a cigarette (for example, the aerosol delivery device may have a generally box-like form).

There are a number of different categories of aerosol delivery devices, each utilising a different smoking substitute approach. A smoking substitute approach corresponds to the manner in which the substitute system operates for a user.

One approach for an aerosol delivery device is the so-called "vaping" approach, in which a vaporisable liquid, typically referred to (and referred to herein) as "e-liquid", is heated by a heater to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerine.

A typical vaping aerosol delivery device includes a mouthpiece, a power source (typically a battery), a tank or liquid reservoir for containing e-liquid, as well as a heater. In use, electrical energy is supplied from the power source to the heater, which heats the e-liquid to produce an aerosol (or "vapour") which is inhaled by a user through the mouthpiece.

Vaping aerosol delivery devices can be configured in a variety of ways. For example, there are "closed system" vaping aerosol delivery devices which typically have a heater and a sealed tank which is prefilled with e-liquid and is not intended to be refilled by an end user. One subset of closed system vaping aerosol delivery devices include a main body which includes the power source, wherein the main body is configured to be physically and electrically coupled to a component including the tank and the heater. In this way, when the tank of a component has been emptied, the device can be reused by connecting it to a new component. Another subset of closed system vaping aerosol delivery devices are completely disposable, and intended for one-use only.

There are also "open system" vaping aerosol delivery devices which typically have a tank that is configured to be refilled by a user, so the device can be used multiple times.

An example vaping aerosol delivery device is the myblu^{™} e-cigarette. The myblu^{™} e cigarette is a closed system device which includes a main body and a consumable component. The main body and consumable component are physically and electrically coupled together by pushing the consumable component into the main body. The main body includes a rechargeable battery. The consumable component includes a mouthpiece, a sealed tank which contains e-liquid, as well as a vaporiser, which for this device is a heating filament coiled around a portion of a wick which is partially immersed in the e-liquid. The device is activated when a microprocessor on board the device detects a user inhaling through the mouthpiece. When the device is activated, electrical energy is supplied from the power source to the vaporiser, which heats e-liquid from the tank to produce a vapour which is inhaled by a user through the mouthpiece.

Another example vaping aerosol delivery device is the blu PRO^{™} e-cigarette. The blu PRO^{™} e cigarette is an open system device which includes a main body, a (refillable) tank, and a mouthpiece. The main body and tank are physically and electrically coupled together by screwing one to the other. The mouthpiece and refillable tank are physically coupled together by screwing one into the other, and detaching the mouthpiece from the refillable tank allows the tank to be refilled with e-liquid. The device is activated by a button on the main body. When the device is activated, electrical energy is supplied from the power source to a vaporiser, which heats e-liquid from the tank to produce a vapour which is inhaled by a user through the mouthpiece.

An alternative to the "vaping" approach is the so-called Heated Tobacco ("HT") approach in which tobacco (rather than an e-liquid) is heated or warmed to release vapour. HT is also known as "heat not burn" ("HNB"). The tobacco may be leaf tobacco or reconstituted tobacco. In the HT approach the intention is that the tobacco is heated but not burned, i.e. the tobacco does not undergo combustion.

The heating, as opposed to burning, of the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

A typical HT aerosol delivery device may include a main body and a consumable component. The consumable component may include the tobacco material. The main body and consumable component may be configured to be physically coupled together. In use, heat may be imparted to the tobacco material by a heating element of the main body, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable component (entrained in the airflow) from the location of vaporization to an outlet of the component (e.g. a mouthpiece), the vapour cools and condenses to form an aerosol for inhalation by the user. The aerosol may contain nicotine and/or flavour compounds.

WO2021122693A1 proposes a method performed by an electrical charger device for an electronic cigarette, and an electrical charger device, the method comprising: establishing a communicative pairing between the electrical charger device and a computing device; establishing a communicative pairing between the electrical charger device and the electronic cigarette; acquiring data relating to a user of the electronic cigarette; determining a charge level to be provided to the electronic cigarette based on the acquired data; and charging the electronic cigarette when the electrical charger device and the electronic cigarette are electrically connected based on the determined charge level.

WO2021116456A1 proposes an electrical charger device comprising an interface configured to establish a wireless communicative pairing between the electrical charger device and an electronic cigarette, the wireless communicative pairing being establishable when the electronic cigarette and the electrical charger device are within communication range of one another; and a controller configured to acquire data related to the electronic cigarette, and configured to prohibit use of the electronic cigarette based on the acquired data and configurable rules.

The present inventor(s) have observed that most aerosol delivery devices currently on the market are configured to operate in isolation of other devices, which limits the functions the aerosol delivery devices can perform.

The present invention has been devised in light of the above considerations.

### Summary

According to a first aspect, there is provided a portable charger for supplying power to an aerosol delivery device according to claim 1.

In this way, the charger may provide a means for communication between an aerosol delivery device and a cloud-based server, without the aerosol delivery device itself needing to have all of the hardware required to provide such functionality. In other words, an aerosol delivery device that is able to communicate with the charger of the first aspect does not need hardware to allow it to communicate with the cloud-based server directly, because it can do so via the portable charger. This may reduce the size, weight and power consumption of the aerosol delivery device.

For the avoidance of doubt, the term "directly" is used herein to mean that the portable charger does not transmit data via an intermediate user device, such as a computer, mobile phone or tablet, upon which the data may be stored and then on-transmitted.

Optional features will now be set out. These are applicable singly or in any combination with any aspect.

The second communication interface may be configured to wirelessly receive data from the cloud-based server. The second communication interface may be configured to transmit the data received from the cloud-based server to the aerosol delivery device.

The second communication interface may be configured to exchange the data (i.e. receive and/or transmit data) with the cloud-based server via a low-power wide-area (LPWA) network (i.e. according to a LPWA radio technology standard). The second communication interface may be configured to exchange data with the cloud-based server via a cellular network.

The LPWA network may be a Narrowband-loT (NB-loT) network. Thus, the second communication interface may be configured to exchange data with the cloud-based server via an NB-loT network (i.e. according to the NB-loT radio technology standard).

The LPWA network may otherwise be an LTE-M, LoRAWAN, WiSUN, or DASH7 network (and the second communication interface may be configured to exchange data according to a corresponding radio technology standard).

The portable charger is configured for physical connection with the aerosol delivery device. The portable charger may comprise a connector configured for physical (e.g. direct/wired) connection with the aerosol delivery device.

The connector may be configured for providing power to the aerosol delivery device (i.e. from a power source of the portable charger). The connector may additionally or alternatively be configured to receive data from and/or transmit data to the aerosol delivery device. Thus, the connector may form part of the first communication interface. The connector may be a USB connector, such as a USB-C connector

The first communication interface is configured to exchange data (i.e. receive and/or transmit data) wirelessly with the aerosol delivery device. The first communication interface may be configured to exchange data with the aerosol delivery device via a short-distance wireless technology, such as Bluetooth^{®} (including e.g. Bluetooth Low Energy^{®}). The first communication interface may comprise a Bluetooth^{®} module.

Thus, more generally, the first communication interface may be configured to exchange data with the aerosol delivery device via a first communication means and the second communication interface may be configured to exchange data with the cloud-based server via a second communication means that is different to the first communication means.

The second communication interface may be configured to as to have a greater range (i.e. be able to transmit data over a further distance) than the first communication interface. The first communication interface may comprise a first antenna. The second communication interface may comprise a second antenna. The first antenna may have a first range and the second antenna may have a second range that is greater range than the first range.

The data that the first communication interface is configured to receive (and which the second communication interface is configured to transmit), may comprise information regarding the aerosol delivery device (e.g. may be telemetry data). For example, the data may comprise usage information (e.g. puff data or battery level), information regarding an operating condition of the aerosol delivery device, location information and/or information regarding a consumable component connected to the aerosol delivery device.

Usage information may include information relating to or describing a number of times the aerosol delivery device has been activated. This information could for example include a number of times the device has been activated starting from a first activation by a user, and/or a number of times the device has been activated since the device was last charged.

The information relating to usage of the aerosol delivery device may include information relating to or describing one or more lengths of time for which the aerosol delivery device has been activated. This information could for example include an average length of time the aerosol delivery device has been activated by a user (per activation), and/or a total length of time aerosol delivery device has been activated by a user (over all activations).

The data that the second communication interface is configured to receive (and which the first communication interface may be configured to transmit) may comprise instructions for controlling the aerosol delivery device. Such instructions may be for, for example, updating the firmware of the aerosol delivery device (or the portable charger), controlling access to the aerosol delivery device, controlling an interface of the aerosol delivery device and/or controlling an operating parameter of the aerosol delivery device.

The portable charger may comprise a memory which is configured to store data received from the cloud-based server and/or the aerosol delivery device. The memory may include non-volatile memory. In this way, the data may be stored on the portable charger before being transmitted to the cloud-based server and/or the aerosol delivery device. This may be advantageous in situations where, for example, there is no connection between the portable charger and the cloud-based server. The data to be transmitted can be stored on the memory and then transmitted by the communication interface to the cloud-based server at a later time. The memory may also be configured to act as a buffer, for example when the rate at which data is received from the aerosol delivery device is greater than the rate at which data can be transferred to the cloud-based server.

The portable charger may also include a controller (e.g. comprising a processor) configured to process the data.

As discussed above, the portable charger may comprise a power source for supplying power to the aerosol delivery device. The power source may be a rechargeable power source, such as a rechargeable battery. The portable charger may comprise a power supply connector for connecting the power supply to an external power source (i.e. for recharging the rechargeable power source).

The portable charger may be in the form of a charging case. Thus, for example, the portable charger may comprise a cavity for receipt of at least a portion of the aerosol delivery device. The cavity may substantially enclose the aerosol delivery device when received therein. The connector (for power supply to and/or data exchange with, the aerosol delivery device) may be disposed in the cavity.

According to a second aspect, there is provided an aerosol delivery system according to claim 9.

The device communication interface is configured for exchanging data (i.e. communicating) with the portable charger (i.e. the first communication interface of the portable charger). That is, the device communication interface is configured to transmit data to and/or receive data from the portable charger.

The aerosol delivery device is configured for physical connection with the portable charger. The aerosol delivery device may comprise a connector configured for physical (e.g. direct or wired) connection with the portable charger (i.e. with a connector of the portable charger).

The connector of the aerosol delivery device may be configured for receiving a power supply from the portable charger (i.e. from a power source of the portable charger). The connector of the aerosol delivery device may additionally or alternatively be configured to receive data from and/or transmit data to the portable charger. Thus, the connector may form part of the device communication interface. The connector may be a USB connector, such as a USB C connector.

The device communication interface may be configured to exchange data (i.e. receive and/or transmit data) wirelessly with the portable charger (i.e. may be in the form of or comprise a wireless interface). The device communication interface may be configured to exchange data with the portable charger via a short-distance wireless technology, such as Bluetooth^{®} (including e.g. Bluetooth Low Energy^{®}). The device communication interface may comprise a Bluetooth^{®} module.

The device communication interface is configured for both physical/wired connection and wireless connection with the portable charger. Thus, for example, the device communication interface may communicate with portable charger via a physical/wired connection when the aerosol delivery device is physically connected to the portable charger and may communicate wirelessly otherwise (i.e. when physically separated from the portable charger).

The aerosol delivery device may comprise a sensor to measure an operating condition of the aerosol delivery device. The device communication interface may be configured to transmit data generated by the sensor to the portable charger.

The aerosol delivery device may comprise a puff (or inhale) sensor for detecting the presence of a puff and/or measuring the intensity of the puff. For example, the puff sensor may be a pressure sensor or other form of airflow sensor.

The aerosol delivery device may be configured to, e.g. based on measurements by the puff sensor, generate information relating to usage of the aerosol delivery device. The usage information may include information relating to or describing one or more lengths of time for which the aerosol delivery device has been activated. This information could for example include an average length of time the aerosol delivery device has been activated by a user (per activation), and/or a total length of time aerosol delivery device has been activated by a user (over all activations).

The aerosol delivery system may comprise a component. The component may form part of the device, or the component may be connectable the device. Where the component is connectable to the device, it may be a consumable component. The usage information may comprise an estimate of the remaining content of the consumable component (and/or the amount of consumable consumed).

The aerosol delivery device may comprise a consumable sensor to detect the amount of consumable remaining in the consumable component and/or to detect information about the consumable (such as the type of consumable).

The device communication interface may be configured to transmit usage information to the portable charger.

The aerosol delivery device may comprise a rechargeable power source (such as a battery or a capacitor) and a battery sensor for detecting a level of charge of the battery. The device communication interface may be configured to transmit data indicative of the level of charge to the portable charger.

The aerosol delivery device may comprise a location sensor configured to detect a location of the aerosol delivery device. For example, the location sensor may be a GPS or GLONASS sensor. The device communication interface may be configured to transmit data indicative of the location of the aerosol delivery device to the portable charger.

The aerosol delivery device may comprise a memory. The memory may include non-volatile memory. The memory may be configured to store measurements/data generated by one or more of the sensors discussed above. The memory may be configured to store data (such as instructions) received from the portable charger (via the device communication interface).

The aerosol delivery device may comprise a controller for controlling the aerosol delivery device. The one or more sensors of the aerosol delivery device discussed above may be operatively connected to the controller. For example, the puff sensor may be operatively connected to the controller so as to be able to provide a signal to the controller that is indicative of a puff state (i.e. puffing or not puffing).

The memory may be operatively connected to the controller. The memory may include instructions which, when implemented, cause the controller to perform certain tasks or steps of a method.

The data that the device communication interface is configured to receive may comprise instructions for controlling the aerosol delivery device (i.e. by the controller). Such instructions may be for, for example, updating firmware of the aerosol delivery device.

The instructions may, for example, comprise instructions to control access to the aerosol delivery device. Thus, for example, the instructions may cause the controller to lock or unlock the aerosol delivery device. This may allow the aerosol delivery device to be locked and unlocked remotely. As an example, instructions to unlock the device may only be provided once an age verification process has been performed.

The instructions may comprise instructions for controlling an interface of the aerosol delivery device, such as an LED pattern/colours and/or vibrations of a haptic feedback unit.

The instructions may comprise instructions for controlling an operating parameter of the aerosol delivery device, such as the amount of power supplied to a heater of the aerosol delivery device.

The aerosol delivery device may comprise a main body may be configured to be physically coupled and/or electrically coupled to the component (i.e. an aerosol-delivery (e.g. a smoking substitute) component).

The aerosol delivery device may further comprise a source of power which may be a battery, or a capacitor.

The main body may house the power source and/or other electrical components. The main body may house the controller.

The front and/or rear surface of the main body may include visual user feedback means (i.e. forming part of the user interface), for example one or more lights e.g. one or more LEDs.

In some embodiments, the main body may include an illumination region configured to allow light provided by a light source (e.g. one or more LEDs) within the main body to shine through.

The aerosol delivery device may comprise a haptic feedback unit (e.g. an electric motor and a weight mounted eccentrically on a shaft of the electric motor), which may be configured to provide the haptic feedback indication(s).

The controller may control power supply to a heating element in response to airflow detection by the puff sensor (discussed above). The control of the power supply may be in the form of activation of a heating element of the aerosol delivery device in response to a detected airflow. The puff sensor may form part of the main body. The heating element may be used in a vaporiser to vaporise an aerosol precursor. The vaporiser may be housed in a vaporising chamber.

The main body may be an elongate body i.e. with a greater length than depth/width. It may have a greater width than depth.

The main body may have a length of between 5 and 30 cm e.g. between 10 and 20 cm such as between 10 and 13 cm. The maximum depth of the main body may be between 5 and 30 mm e.g. between 10 and 20 mm.

The main body may have a front surface that is curved in the transverse dimension. The main body may have a rear surface that is curved in the transverse dimension. The curvatures of the front surface and rear surface may be of the opposite sense to one another. Both front and rear surfaces may be convex in the transverse dimension. They may have an equal radius of curvature.

The radius of curvature of the front surface may be between 10 and 50 mm, preferably between 10 and 40 mm, preferably between 10 and 30 mm, preferably been 10 and 20 mm, more preferably between 10 and 15 mm, more preferably substantially 13.5 mm.

The front and rear surfaces may meet at opposing transverse edges of the main body. This leads to a mandorla-/lemon-/eye-shaped cross-sectional shape of the device body.

The transverse edges may have a radius of curvature that is significantly smaller than the radius of curvature of either the front or rear surface. This leads to the transverse edges being substantially "pointed" or "sharp". The transverse edges may have a radius of curvature in the transverse dimension of less than 10 mm, preferably less than 5 mm, preferably less than 2 mm, preferably less than 1 mm.

The transverse edges may extend substantially the full longitudinal length of the main body. However, in some embodiments, the transverse edges may only extend along a longitudinal portion of the main body.

The main body may have a curved longitudinal axis i.e. curved in a direction between the front and rear faces.

The cavity of the portable charger (e.g. charging case) may have a shape that is complementary to at least a portion of the main body, such that the portion of the main body fits closely within the cavity.

As mentioned above, the aerosol delivery system may comprise an (e.g. consumable) aerosol-delivery component configured to be coupled to the main body of the device. The component may be an aerosol-delivery (e.g. a smoking substitute) component.

The component may house an aerosol precursor. Specifically, the component may comprise a tank, and the tank may contain the aerosol-precursor. The component may comprise a heating element. The heating element may be used in a vaporiser to vaporise the aerosol-precursor. The vaporiser may be housed in a vaporising chamber.

The component may be configured to be physically and/or electrically coupled to the main body.

The main body may be configured to receive the component in order to physically couple the main body and the component together. For example, the component may be at least partially received in a recess of the main component, such that there is a snap engagement between the main device and the component. Alternatively, the main body and the component may be physically coupled together by screwing one onto the other, or through a bayonet fitting.

The component may comprise one or more engagement portions for engaging with the main body.

The component may comprise an electrical interface for interfacing with a corresponding electrical interface of the main body and for identifying when the component is electrically coupled to the main device. One or both of the electrical interfaces may include one or more electrical contacts. Thus, when the main body is coupled to the component, the electrical interface may configured to transfer electrical power from the main body to the component. The electrical interface may also be used to identify the component from a list of known types.

The main body may be able to detect information about the component coupled to the main body via an RFID reader, a barcode or QR code reader. This interface may be able to identify a characteristic (e.g. a type) of the component. In this respect, the component may include any one or more of an RFID chip, a barcode or QR code, or memory within which is an identifier and which can be interrogated via the interface. The aerosol delivery device may be configured to transmit (i.e. via the device communication interface) such information to the portable charger.

An airflow path may extend through the main body and the component, the airflow path extending from an air inlet to an outlet. The outlet may be at a mouthpiece portion of the component. In this respect, a user may draw fluid (e.g. air) into and along the airflow path by inhaling at the outlet (i.e. using the mouthpiece). The airflow path passes the vaporiser between the air inlet and the air outlet.

The airflow path may comprise a first portion extending from the air inlet towards the vaporiser. The second portion of the airflow path passes through the vaporising chamber to a conduit that extends to the air outlet. The conduit may extend along the axial centre of the component.

References to "downstream" in relation to the airflow path are intended to refer to the direction towards the air outlet/outlet portion. Thus the second and third portions of the airflow path are downstream of the first portion of the airflow path. Conversely, references to "upstream" are intended to refer to the direction towards the air inlet. Thus the first portion of the airflow path (and the air inlet) is upstream of the second/third portions of the airflow path (and the air outlet/outlet portion).

References to "upper", "lower", "above" or "below" are intended to refer to the component when in an upright/vertical orientation i.e. with elongate (longitudinal/length) axis of the component vertically aligned and with the mouthpiece vertically uppermost.

As noted above, the component may comprise a tank for housing an aerosol precursor (e.g. a liquid aerosol precursor). The aerosol precursor may comprise an e-liquid, for example, comprising a base liquid and e.g. nicotine. The base liquid may include propylene glycol and/or vegetable glycerine.

At least a portion of one of the walls defining the tank may be translucent or transparent.

The conduit may extend through the tank with the conduit walls defining an inner region of the tank. In this respect, the tank may surround the conduit e.g. the tank may be annular.

As discussed above, the air flow path passes the vaporiser between the air inlet to the air outlet. The vaporiser may comprise a wick e.g. an elongate wick which may have a cylindrical shape.

The wick may be oriented so as to extend in the direction of the width dimension of the component (perpendicular to the longitudinal axis of the component). Thus the wick may extend in a direction perpendicular to the direction of airflow in the airflow path.

The wick may comprise a porous material. A portion of the wick may be exposed to airflow in the airflow path. The wick may also comprise one or more portions in contact with liquid aerosol precursor stored in the tank. For example, opposing ends of the wick may protrude into the tank and a central portion (between the ends) may extend across the airflow path so as to be exposed to airflow. Thus, fluid may be drawn (e.g. by capillary action) along the wick, from the tank to the exposed portion of the wick.

The heating element may be in the form of a filament wound about the wick (e.g. the filament may extend helically about the wick). The filament may be wound about the exposed portion of the wick. The heating element is electrically connected (or connectable) to the power source. Thus, in operation, the power source may supply electricity to (i.e. apply a voltage across) the heating element so as to heat the heating element. This may cause liquid stored in the wick (i.e. drawn from the tank) to be heated so as to form a vapour and become entrained in airflow along the airflow path. This vapour may subsequently cool to form an aerosol e.g. in the conduit.

In some embodiments, the aerosol-former (e.g. e-liquid) may be replenished by re-filling a tank that is integral with the device (rather than replacing the consumable). Access to the tank (for re-filling of the e-liquid) may be provided via e.g. opening to the tank that is sealable with a closure (e.g. a cap).

The aerosol delivery system may further comprise the cloud-based server. The cloud-based server may be configured to exchange data with the portable charger.

The cloud-based server may be configured to receive data from the portable charger, and store the received data. The cloud-based server may be configured to transmit data to the portable charger. The cloud-based server may be configured to perform operations on the received and/or stored data.

The cloud-based server may be configured to transmit instructions for controlling the aerosol delivery device to the portable charger (i.e. for subsequent transmission to the aerosol delivery device by the portable charger). The instructions may include one or more of: instructions for controlling access to the aerosol delivery device, instructions for controlling a user interface of the aerosol delivery device, and/or instructions for controlling an operating parameter of the aerosol delivery device.

The cloud-based server may be configured to receive usage information from the portable charger. The cloud-based server may be configured to act upon that usage information. Thus, for example, the cloud-based server may be configured to generate consumable component replacement orders based on the usage information.

In some embodiments, the system may comprise a plurality of portable chargers and aerosol delivery devices, and the cloud-based server may be configured to communicate with the portable charger. The cloud-based server may be configured to receive location data, indicative of the location of a corresponding aerosol delivery device, from first and second portable chargers. The cloud-based server may be configured to compare the location received from the first portable charger with the location received from the second portable charger and transmit an alert signal to one or both portable charges based on the comparison. Thus, for example, the comparison may comprise determining a distance between the locations and an alert signal may be transmitted to the portable chargers if the distance is below a threshold distance (i.e. indicating proximity of the aerosol delivery devices connected to the portable charges).

The invention includes the combination of the aspects and preferred features described except where such a combination is clearly impermissible or expressly avoided.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

So that further aspects and features thereof may be appreciated, embodiments will now be discussed in further detail with reference to the accompanying figures, in which:
Fig. 1A is a front schematic view of an aerosol delivery device;
Fig. 1B is a front schematic view of a main body of the aerosol delivery device;
Fig. 1C is a front schematic view of a consumable component of the aerosol delivery device;
Fig. 2A is a schematic of the components of the main body;
Fig. 2B is a schematic of the components of the consumable component;
Fig. 3 is a section view of the consumable component;
Fig. 4 is a perspective view of the device;
Fig. 5 is a cross-section of the device in a plane perpendicular to the longitudinal axis;
Fig. 6 is a schematic illustrating an aerosol delivery system in a first configuration; and
Fig. 7 is a schematic illustrating the aerosol delivery system of Fig. 6 in a second configuration.

### Detailed description of the embodiments

Aspects and embodiments will now be discussed with reference to the accompanying figures. Further aspects and embodiments will be apparent to those skilled in the art.

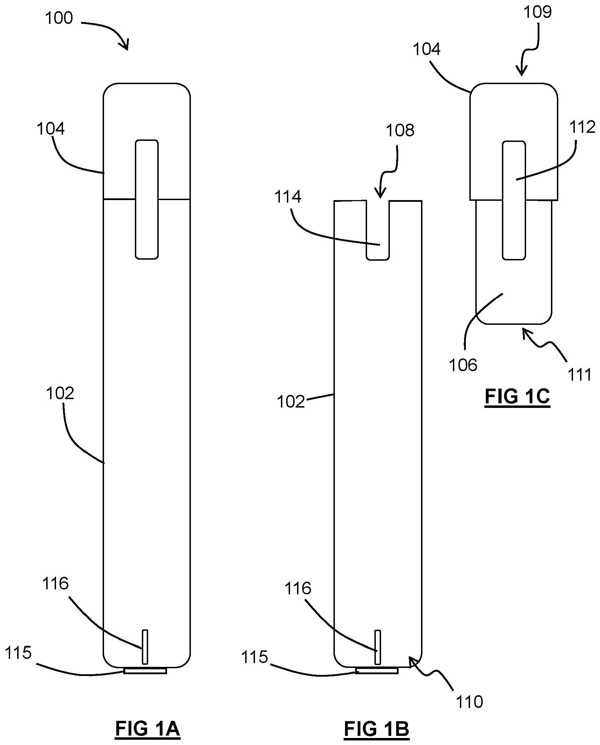

Fig. 1A shows a first embodiment of an aerosol delivery device 100. In this example, the aerosol delivery device 100 includes a main body 102 and a consumable component 104. The consumable component 104 may alternatively be referred to as a "pod", "cartridge" or "cartomizer".

In this example, the aerosol delivery device 100 is a closed system vaping system, wherein the component 104 includes a sealed tank 106 and is intended for single-use only. The component 104 is removably engageable with the main body 102 (i.e. for removal and replacement). Fig. 1A shows the aerosol delivery device 100 with the main body 102 physically coupled to the component 104, Fig. 1B shows the main body 102 of the aerosol delivery device 100 without the component 104, and Fig. 1C shows the component 104 of the aerosol delivery device 100 without the main body 102.

The main body 102 and the component 104 are configured to be physically coupled together by pushing the component 104 into a cavity at an upper end 108 of the main body 102, such that there is an interference fit between the main body 102 and the component 104. In other examples, the main body 102 and the component may be coupled by screwing one onto the other, or through a bayonet fitting.

The component 104 includes a mouthpiece (not shown in Fig. 1A, 1B or 1C) at an upper end 109 of the component 104, and one or more air inlets (not shown) in fluid communication with the mouthpiece such that air can be drawn into and through the component 104 when a user inhales through the mouthpiece. The tank 106 containing e-liquid is located at the lower end 111 of the component 104.

The tank 106 includes a window 112, which allows the amount of e-liquid in the tank 106 to be visually assessed. The main body 102 includes a slot 114 so that the window 112 of the component 104 can be seen whilst the rest of the tank 106 is obscured from view when the component 104 is inserted into the cavity at the upper end 108 of the main body 102.

The lower end 110 of the main body 102 also includes a light 116 (e.g. an LED) located behind a small translucent cover. The light 116 may be configured to illuminate when the aerosol delivery device 100 is activated. Whilst not shown, the component 104 may identify itself to the main body 102, via an electrical interface, RFID chip, or barcode.

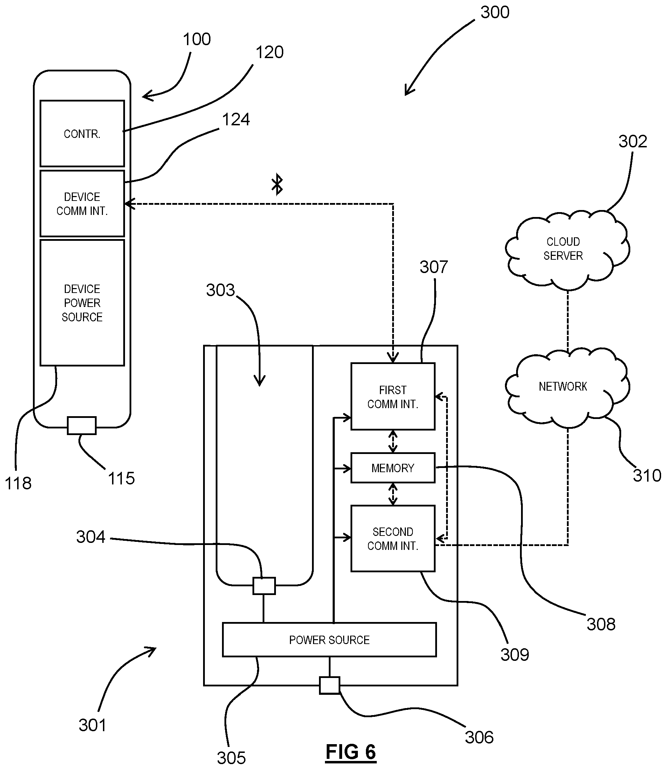

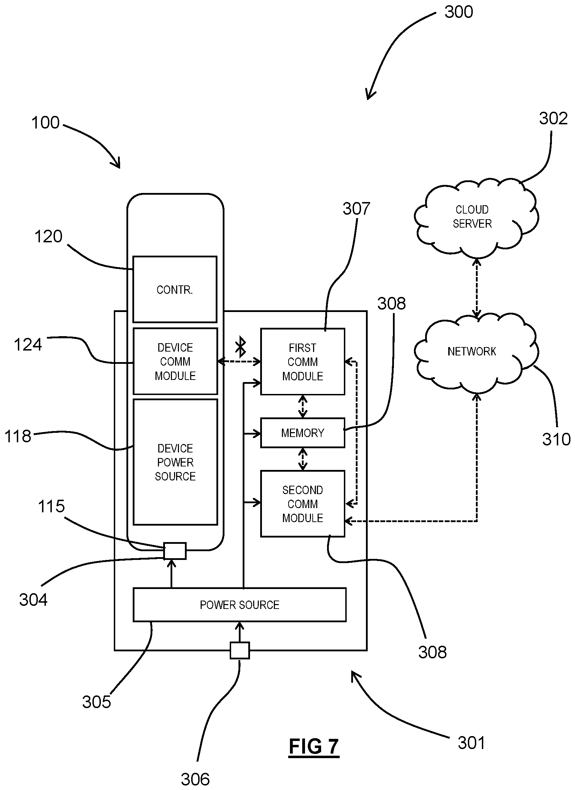

The lower end 110 of the main body 102 also includes a device connector 115, which is usable to charge a battery within the main body 102. The device connector 115 can also be used to transfer data to and from the main body, for example to update firmware thereon. This is described further below with reference to figures 6 and 7.

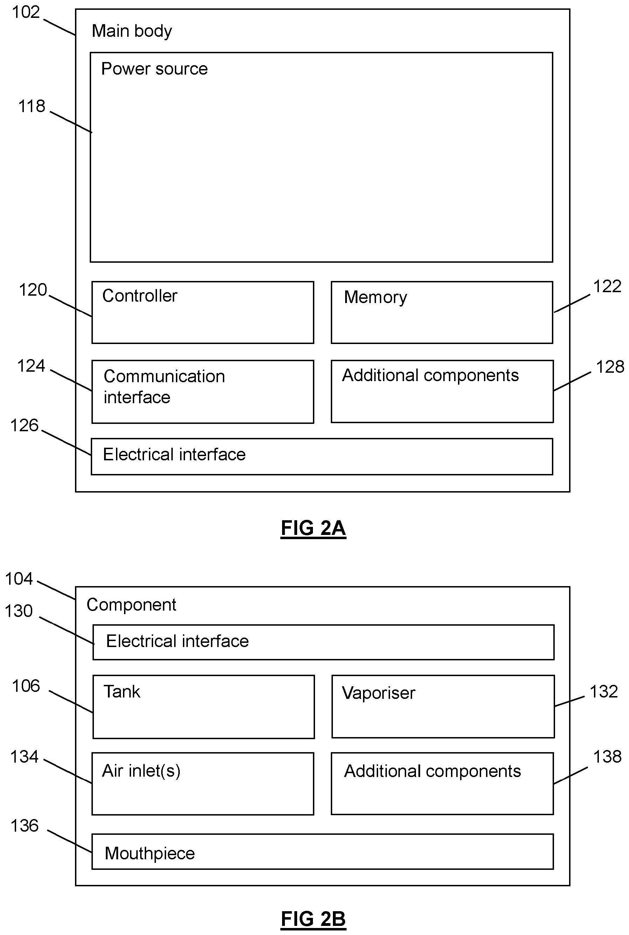

Figs. 2A and 2B are schematic drawings of the main body 102 and component 104. As is apparent from Fig. 2A, the main body 102 includes a power source 118, a controller 120, a memory 122, a communication interface 124, an electrical interface, and, optionally, one or more additional components 128.

The power source 118 is preferably a rechargeable battery. The controller 120 may include a microprocessor, for example. The memory 122 preferably includes non-volatile memory. The memory may include instructions which, when implemented, cause the controller 120 to perform certain tasks or steps of a method.

As will be described below, the communication interface 124 is configured to communicate wirelessly with a portable charger, e.g. via Bluetooth^{®}. To this end, the communication interface 124 may include a Bluetooth^{®} antenna. The communication interface 124 may also communicate with the portable charger via a physical connection (such as the connector 115).

The electrical interface 126 of the main body 102 may include one or more electrical contacts. The electrical interface 126 may be located in a base of the aperture in the upper end 108 of the main body 102. When the main body 102 is physically coupled to the component 104, the electrical interface 126 is configured to transfer electrical power from the power source 118 to the component 104 (i.e. upon activation of the aerosol delivery device 100).

The electrical interface 126 may also be used to identify the component 104 from a list of known components. For example, the component 104 may be a particular flavour and/or have a certain concentration of nicotine (which may be identified by the electrical interface 126). This can be indicated to the controller 120 of the main body 102 when the component 104 is connected to the main body 102. Additionally, or alternatively, there may be a separate interface provided in the main body 102 and a corresponding interface in the component 104 such that, when connected, the component 104 can identify itself to the main body 102.

The additional components 128 of the main body 102 may comprise the light 116 discussed above.

The additional components 128 of the main body 102 also comprise the connector 115 configured to receive power from the charging station (i.e. when the power source 118 is a rechargeable battery). This may be located at the lower end 110 of the main body 102.

The additional components 128 of the main body 102 may include a battery charging control circuit, for controlling the charging of the rechargeable battery. However, a battery charging control circuit could equally be located in the portable charger (discussed further below).

The additional components 128 of the main body 102 may include a sensor, such as an airflow (i.e. puff) sensor for detecting airflow in the aerosol delivery device 100, e.g. caused by a user inhaling through a mouthpiece 136 of the component 104. The aerosol delivery device 100 may be configured to be activated when airflow is detected by the airflow sensor. This sensor could alternatively be included in the component 104. The airflow sensor can be used to determine, for example, how heavily a user draws on the mouthpiece or how many times a user draws on the mouthpiece in a particular time period.

The additional components 128 of the main body 102 may include a user input, e.g. a button. The aerosol delivery device 100 may be configured to be activated when a user interacts with the user input (e.g. presses the button). This provides an alternative to the airflow sensor as a mechanism for activating the aerosol delivery device 100.

The additional components 128 of the main body 102 may include an accelerometer. The accelerometer may be configured to sense movement of the aerosol delivery device.

As shown in Fig. 2B, the component 104 includes the tank 106, an electrical interface 130, a vaporiser 132, one or more air inlets 134, a mouthpiece 136, and one or more additional components 138.

The electrical interface 130 of the component 104 may include one or more electrical contacts. The electrical interface 126 of the main body 102 and an electrical interface 130 of the component 104 are configured to contact each other and thereby electrically couple the main body 102 to the component 104 when the lower end 111 of the component 104 is inserted into the upper end 108 of the main body 102 (as shown in Fig. 1A). In this way, electrical energy (e.g. in the form of an electrical current) is able to be supplied from the power source 118 in the main body 102 to the vaporiser 132 in the component 104.

The vaporiser 132 is configured to heat and vaporise e-liquid contained in the tank 106 using electrical energy supplied from the power source 118. As will be described further below, the vaporiser 132 includes a heating filament and a wick. The wick draws e-liquid from the tank 106 and the heating filament heats the e-liquid to vaporise the e-liquid.

The one or more air inlets 134 are preferably configured to allow air to be drawn into the aerosol delivery device 100, when a user inhales through the mouthpiece 136. When the component 104 is physically coupled to the main body 102, the air inlets 134 receive air, which flows to the air inlets 134 along a gap between the main body 102 and the lower end 111 of the component 104.

In operation, a user activates the aerosol delivery device 100, e.g. through interaction with a user input forming part of the main body 102 or by inhaling through the mouthpiece 136 as described above. Upon activation, the controller 120 may supply electrical energy from the power source 118 to the vaporiser 132 (via electrical interfaces 126, 130), which may cause the vaporiser 132 to heat e-liquid drawn from the tank 106 to produce a vapour which is inhaled by a user through the mouthpiece 136.

An example of one of the one or more additional components 138 of the component 104 is an interface for obtaining an identifier of the component 104. As discussed above, this interface may be, for example, an RFID reader, a barcode, a QR code reader, or an electronic interface which is able to identify the component. The component 104 may, therefore include any one or more of an RFID chip, a barcode or QR code, or memory within which is an identifier and which can be interrogated via the electronic interface in the main body 102.

It should be appreciated that the aerosol delivery device 100 shown in figures 1A to 2B is just one exemplary implementation of an aerosol delivery device. For example, the device could otherwise be in the form of an entirely disposable (single-use) system.

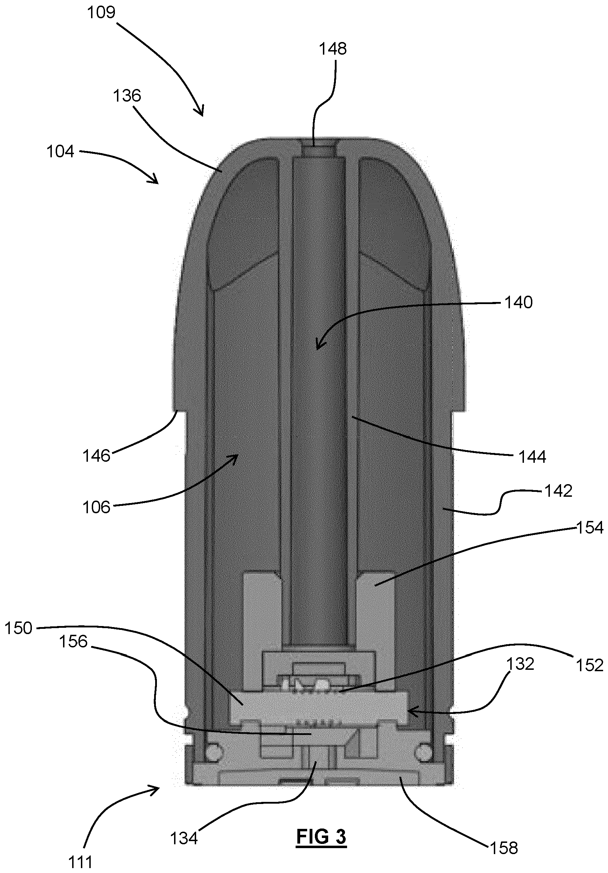

Fig. 3 is a section view of the component 104 described above. The component 104 comprises a tank 106 for storing e-liquid, a mouthpiece 136 and a conduit 140 extending along a longitudinal axis of the component 104. In the illustrated embodiment the conduit 140 is in the form of a tube having a substantially circular transverse cross-section (i.e. transverse to the longitudinal axis). The tank 106 surrounds the conduit 140, such that the conduit 140 extends centrally through the tank 106.

A tank housing 142 of the tank 106 defines an outer casing of the component 104, whilst a conduit wall 144 defines the conduit 140. The tank housing 142 extends from the lower end 111 of the component 104 to the mouthpiece 136 at the upper end 109 of the component 104. At the junction between the mouthpiece 136 and the tank housing 142, the mouthpiece 136 is wider than the tank housing 142, so as to define a lip 146 that overhangs the tank housing 142. This lip 146 acts as a stop feature when the component 104 is inserted into the main body 102 (i.e. by contact with an upper edge of the main body 102).

The tank 106, the conduit 140 and the mouthpiece 136 are integrally formed with each other so as to form a single unitary component and may e.g. be formed by way of an injection moulding process. Such a component may be formed of a thermoplastic material such as polypropylene.

The mouthpiece 136 comprises a mouthpiece aperture 148 defining an outlet of the conduit 140. The vaporiser 132 is fluidly connected to the mouthpiece aperture 148 and is located in a vaporising chamber 156 of the component 104. The vaporising chamber 156 is downstream of the inlet 134 of the component 104 and is fluidly connected to the mouthpiece aperture 148 (i.e. outlet) by the conduit 140.

The vaporiser 132 comprises a porous wick 150 and a heater filament 152 coiled around the porous wick 150. The wick 150 extends transversely across the chamber vaporising 156 between sidewalls of the chamber 156 which form part of an inner sleeve 154 of an insert 158 that defines the lower end 111 of the component 104 that connects with the main body 102. The insert 158 is inserted into an open lower end of the tank 106 so as to seal against the tank housing 142.

In this way, the inner sleeve 154 projects into the tank 106 and seals with the conduit 140 (around the conduit wall 144) so as to separate the vaporising chamber 156 from the e-liquid in the tank 106. Ends of the wick 150 project through apertures in the inner sleeve 154 and into the tank 106 so as to be in contact with the e-liquid in the tank 106. In this way, e-liquid is transported along the wick 150 (e.g. by capillary action) to a central portion of the wick 150 that is exposed to airflow through the vaporising chamber 156. The transported e-liquid is heated by the heater filament 152 (when activated e.g. by detection of inhalation), which causes the e-liquid to be vaporised and to be entrained in air flowing past the wick 150. This vaporised liquid may cool to form an aerosol in the conduit 140, which may then be inhaled by a user.

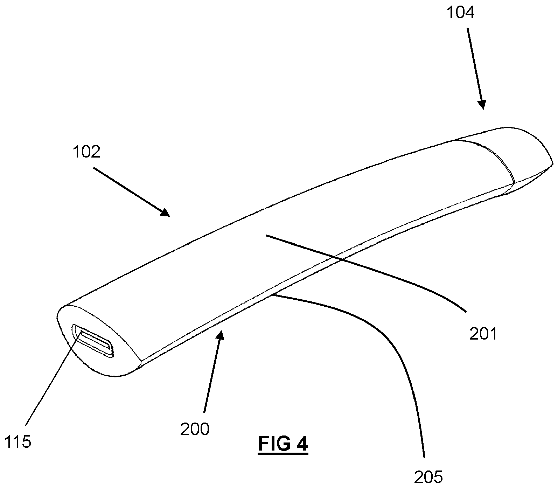

Fig. 4 shows a perspective view of an embodiment of the main body 102 engaged with the component 104 at the upper end 108. The main body 102 includes a charging connection 115 at the lower end 110.

The front surface 201 of a housing 200 of the main body 102 is curved in the transverse dimension. The rear surface 202 of the housing 200 is curved in the transverse dimension. The curvatures of the front surface 201 and rear surface 202 are of the opposite sense to one another. Both front and rear surfaces 201, 202 are convex in the transverse dimension. This leads to a mandorla-/lemon-/eye-shaped cross sectional shape of the main body 102.

The front surface 201 and rear surface 202 meet at two transverse edges 205. The transverse edges 205 have a radius of curvature that is significantly smaller than the radius of curvature of either the front 201 or rear surface 202. This leads to the transverse edges being substantially "pointed" or "sharp". The transverse edges may have a radius of curvature in the transverse dimension of less than 1 millimetre.

As illustrated in Fig. 4, the transverse edges 205 extend substantially the full longitudinal length of the main body 102.

The front surface 201 of the main body 102 may include visual user feedback means.

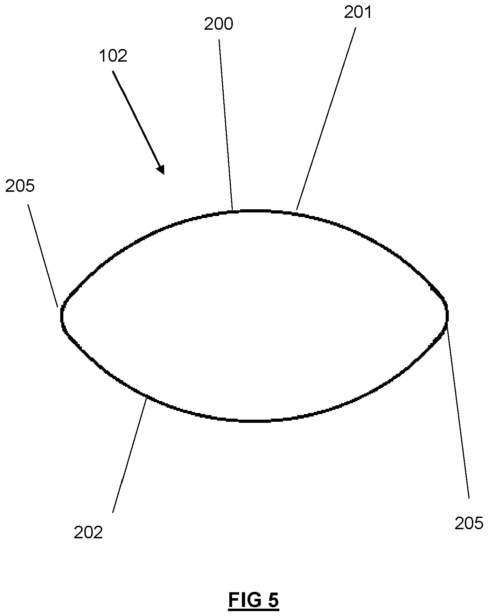

Fig. 5 illustrates a schematic transverse cross section through the main body 102 of Fig. 4, in accordance with an embodiment. The front surface 201 and rear surface 202 are shown meeting at the transverse edges 205 on either side of the housing 200 of the main body 102. The radius of curvature in the transverse dimension of the front surface 201 is equal to the radius of curvature in the transverse dimension of the rear surface 202.

The radius of curvature of the front surface 201 may be between 10 and 15 mm.

Fig. 6 illustrates an aerosol delivery system 300 comprising an aerosol delivery device 100, which may be the same as those described above, a portable charger in the form of a charging case 301, and a cloud-based server 302. For clarity, only the power source 118, controller 120, connector 115, and the communication interface 124 of the aerosol delivery device 100 are illustrated.

The charging case 301 comprises a cavity 303 shaped and sized for receipt of the aerosol delivery device 100 (as is shown in Fig. 7). An end of the cavity comprises a connector 304 for electrical connection with the connector 115 of the aerosol delivery device 100. The connector 304 is operatively connected to a power source 305 of the charging case 301. The power source 305, in this case, is a rechargeable battery, which is rechargeable via a power supply connector 306 of the charging case 301. The power source 305 supplies power to a first communication interface 307, memory 308 and second communication interface 309.

The first communication interface 307 is configured to exchange data wirelessly with the aerosol delivery device 100. In particular, the first communication interface 307 is configured to exchange data with the communication interface 124 of the aerosol delivery device via a Bluetooth^{®} connection. To facilitate this, both the first communication interface 307 and the device communication interface 124 comprise Bluetooth^{®} antennas.

The second communication interface 309 is configured to wirelessly exchange data directly with the cloud-based server 302. Thus, the communication is made without first transmitting the data to an intermediate user device such as a computer or mobile phone (but may be transmitted to the cloud-based server 302 via infrastructure, such as cell towers, forming part of a network facilitating the communication). In the present embodiment the second communication interface 309 communicates with the cloud-based server via an LPWA network, in the form of an NB-loT network 310 according to the NB-loT technology standard.

Thus, the first 307 and second 309 communication interfaces are configured to connect to two different types of device in two different ways. In particular, the range of the second communication interface 309 is much larger than that of the first communication interface 307. In this way, the charging case 301 can be used by the aerosol delivery device 100 to communicate with the cloud-based server 302. This means the aerosol delivery device 100 itself does not need to contain the components required to communicate with the cloud-based server. It also minimises the power requirements of the aerosol delivery device 100.

The aerosol delivery device 100 (e.g. the device communication interface 124) is configured to transmit data to the cloud-based server 302 (via the charging case 301), including: usage data (e.g. puff/inhale data), battery charge level data, location data, and data indicative of the nature of a connected consumable component. As this data passes through the charging case 301, it may be stored in the memory 308. Where, for example, data is received and the connection between the aerosol delivery device 100 and the charging case 301 is not active, the data can be stored in the memory until the connection is activated.

The cloud based server 302 is configured to transmit data to the aerosol delivery device 100 (via the charging case 301), including: instructions to update the firmware of the device 100, instructions to control the interface of the device 100, instructions to control an operating parameter of the device 100 (e.g. heater power), and instructions to lock or unlock access to the device 100. Again, the data may be stored in the memory 308 of the charging case 301.

As noted above, the aerosol delivery device 100 can be received in a cavity 303 of the charging case 301 to charge the power source 118 of the aerosol delivery device 118. This is shown in Figure 7. As is apparent from this figure, when the aerosol delivery device 100 is received in the cavity 303, the connectors 115, 304 of the aerosol delivery device 100 and charging case 301 form an electrical connection. In this way, power may be supplied from the power source 305 of the charging case 301 to the power source 118 of the aerosol delivery device 100. In some embodiments, data may also be transferred via this connection (e.g. as an alternative to the wireless connection between the first communication interface 307 and the device communication interface 124). In this embodiment, however, the wireless connection is simply maintained for any exchange of data required while the aerosol delivery device 100 is received in the cavity 303.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, +/- 10%.

The words "preferred" and "preferably" are used herein refer to embodiments of the invention that may provide certain benefits under some circumstances.

## Claims

1. A portable charger (301) for supplying power to an aerosol delivery device (100), the portable charger (301) comprising:
a first communication interface (307) configured to receive data from an aerosol delivery device (100), and a second communication interface (309) configured to wirelessly transmit the received data directly to a server (302);
**characterised in that** the server is a cloud-based server, and **in that** the first communication interface (307) is configured for both physical/wired and wireless connection with the aerosol delivery device (100).

2. A portable charger (301) according to claim 1 wherein the second communication interface (309) is configured to wirelessly receive data from the cloud-based server (302), and the first communication interface (307) is configured to transmit the received data to the aerosol delivery device (100).

3. A portable charger (301) according to claim 1 or 2 wherein the second communication interface (309) is configured to exchange data with the cloud-based server (302) via a low-power wide-area (LPWA) network.

4. A portable charger (301) according to claim 3 wherein the second communication interface (309) is configured to exchange data with the cloud-based server via a Narrowband-loT network (310).

5. A portable charger (301) according to any one of the preceding claims wherein the first communication interface (307) is configured to wirelessly exchange data with the aerosol delivery device (100) via a short-distance wireless technology.

6. A portable charger (301) according to any one of the preceding claims wherein the first communication interface (307) is configured to exchange data with the aerosol delivery device (100) via a first communication means and the second communication interface (309) is configured to exchange data with the cloud-based server (302) via a second communication means that is different to the first communication means.

7. A portable charger (301) according to any one of the preceding claims wherein the second communication interface (309) is configured to have a greater range than the first communication interface (307).

8. A portable charger (301) according to any one of the preceding claims wherein the first communication interface (307) comprises a first antenna having a first range, and the second communication interface (309) comprises a second antenna having a second range that is greater than the first range.

9. An aerosol delivery system (300) comprising:
an aerosol delivery device (100); and
a portable charger (301) according to any one of the preceding claims, the portable charger (301) connectable to the aerosol delivery device (100) to supply power to the aerosol delivery device (100),
wherein the aerosol delivery device (100) comprises a device communication interface (124) configured for both physical/wired and wireless connection with the portable charger (301) to exchange data therewith.

10. An aerosol delivery system (300) according to claim 9, wherein the device communication interface (124) is configured to wirelessly exchange data with the portable charger (301) via a short-distance wireless technology.

11. An aerosol delivery system (300) according to claim 10 wherein the aerosol delivery device (100) comprises a sensor for measuring an operating condition of the aerosol delivery device (100), and the device communication interface (124) is configured to transmit data generated by the sensor to the portable charger (301).

12. An aerosol delivery system (300) according to claim 11 wherein the sensor is one of a puff sensor, battery sensor or location sensor.

13. An aerosol delivery system (300) according to any one of claims 9 to 12 comprising a cloud-based server (302) configured to exchange data with the portable charger (301).

14. An aerosol delivery system (300) according to claim 13 wherein the cloud-based server (302) is configured to transmit instructions for controlling the aerosol delivery device (100), to the portable charger (302).

15. An aerosol delivery system (300) according to claim 14 wherein the instructions include one or more of: instructions for controlling access to the aerosol delivery device (100), instructions for controlling a user interface of the aerosol delivery device (100), and/or instructions for controlling an operating parameter of the aerosol delivery device (100).

## Patentansprüche

1. Tragbares Ladegerät (301) zum Versorgen einer Aerosolabgabevorrichtung (100) mit Leistung, wobei das tragbare Ladegerät (301) Folgendes umfasst:
eine erste Kommunikationsschnittstelle (307), die ausgelegt ist, um Daten von einer Aerosolabgabevorrichtung (100) zu empfangen, und eine zweite Kommunikationsschnittstelle (309), die ausgelegt ist, um die empfangenen Daten direkt drahtlos an einen Server (302) zu übertragen;
**dadurch gekennzeichnet, dass** der Server ein Cloud-basierter Server ist und dass die erste Kommunikationsschnittstelle (307) für eine physikalische/verdrahtete sowie für eine drahtlose Verbindung mit der Aerosolabgabevorrichtung (100) ausgelegt ist.

2. Tragbares Ladegerät (301) nach Anspruch 1, wobei die zweite Kommunikationsschnittstelle (309) ausgelegt ist, um drahtlos Daten von dem Cloud-basierten Server (302) zu empfangen, und die erste Kommunikationsschnittstelle (307) ausgelegt ist, um die empfangenen Daten an die Aerosolabgabevorrichtung (100) zu übertragen.

3. Tragbares Ladegerät (301) nach Anspruch 1 oder 2, wobei die zweite Kommunikationsschnittstelle (309) ausgelegt ist, um Daten mit dem Cloud-basierten Server (302) über ein Niedrigenergieweitverkehr- (LPWA-) Netzwerk auszutauschen.

4. Tragbares Ladegerät (301) nach Anspruch 3, wobei die zweite Kommunikationsschnittstelle (309) ausgelegt ist, um Daten mit dem Cloud-basierten Server über ein Schmalband-loT-Netzwerk (310) auszutauschen.

5. Tragbares Ladegerät (301) nach einem der vorangegangenen Ansprüche, wobei die erste Kommunikationsschnittstelle (307) ausgelegt ist, um Daten über eine Nahbereich-Drahtlostechnologie drahtlos mit der Aerosolabgabevorrichtung (100) auszutauschen.

6. Tragbares Ladegerät (301) nach einem der vorangegangenen Ansprüche, wobei die erste Kommunikationsschnittstelle (307) ausgelegt ist, um Daten über ein erstes Kommunikationsmittel mit der Aerosolabgabevorrichtung (100) auszutauschen, und die zweite Kommunikationsschnittstelle (309) ausgelegt ist, um Daten mit dem Cloud-basierten Server (302) über ein zweites Kommunikationsmittel auszutauschen, das sich von dem ersten Kommunikationsmittel unterscheidet.

7. Tragbares Ladegerät (301) nach einem der vorangegangenen Ansprüche, wobei die zweite Kommunikationsschnittstelle (309) ausgelegt ist, um eine größere Reichweite aufzuweisen als die erste Kommunikationsschnittstelle (307).

8. Tragbares Ladegerät (301) nach einem der vorangegangenen Ansprüche, wobei die erste Kommunikationsschnittstelle (307) eine erste Antenne mit einer ersten Reichweite umfasst, und die zweite Kommunikationsschnittstelle (309) eine zweite Antenne mit einer zweiten Reichweite umfasst, die größer ist als die erste Reichweite.

9. Aerosolabgabesystem (300), das Folgendes umfasst:
eine Aerosolabgabevorrichtung (100); und
ein tragbares Ladegerät (301) nach einem der vorangegangenen Ansprüche, wobei das tragbare Ladegerät (301) mit der Aerosolabgabevorrichtung (100) verbindbar ist, um die Aerosolabgabevorrichtung (100) mit Leistung zu versorgen,
wobei die Aerosolabgabevorrichtung (100) eine Gerätekommunikationsschnittstelle (124) umfasst, die zur physikalischen/verdrahteten sowie zur drahtlosen Verbindung mit dem tragbaren Ladegerät (301) zum Austausch von Daten mit diesem ausgelegt ist.

10. Aerosolabgabesystem (300) nach Anspruch 9, wobei die Gerätekommunikationsschnittstelle (124) ausgelegt ist, um über eine Nahbereich-Drahtlostechnologie drahtlos Daten mit dem tragbaren Ladegerät (301) auszutauschen.

11. Aerosolabgabesystem (300) nach Anspruch 10, wobei die Aerosolabgabevorrichtung (100) einen Sensor zum Messen einer Betriebsbedingung der Aerosolabgabevorrichtung (100) umfasst, und die Gerätekommunikationsschnittstelle (124) ausgelegt ist, um Daten, die durch den Sensor erzeugt wurden, an das tragbare Ladegerät (301) zu übertragen.

12. Aerosolabgabesystem (300) nach Anspruch 11, wobei der Sensor einer aus einem Zugsensor, einem Batteriesensor oder einem Positionssensor ist.

13. Aerosolabgabesystem (300) nach einem der Ansprüche 9 bis 12, umfassend einen Cloud-basierten Server (302), der ausgelegt ist, um Daten mit dem tragbaren Ladegerät (301) auszutauschen.

14. Aerosolabgabesystem (300) nach Anspruch 13, wobei der Cloud-basierte Server (302) ausgelegt ist, um Befehle zum Steuern der Aerosolabgabevorrichtung (100) an das tragbare Ladegerät (302) zu übertragen.

15. Aerosolabgabesystem (300) nach Anspruch 14, wobei die Befehle einen oder mehrere der folgenden umfassen: Befehle zum Steuern des Zugriffs auf die Aerosolabgabevorrichtung (100), Befehle zum Steuern einer Benutzerschnittstelle der Aerosolabgabevorrichtung (100) und/oder Befehle zum Steuern eines Betriebsparameters der Aerosolabgabevorrichtung (100).

## Revendications

1. Chargeur portable (301) pour alimenter en puissance un dispositif de distribution d'aérosol (100), le chargeur portable (301) comprenant :
une première interface de communication (307) configurée pour recevoir des données en provenance d'un dispositif de distribution d'aérosol (100), et une seconde interface de communication (309) configurée pour transmettre sans fil les données reçues directement à un serveur (302) ;
**caractérisé en ce que** le serveur est un serveur en nuage, et **en ce que**
la première interface de communication (307) est configurée pour une connexion physique/filaire et sans fil avec le dispositif de distribution d'aérosol (100).

2. Chargeur portable (301) selon la revendication 1, dans lequel la seconde interface de communication (309) est configurée pour recevoir sans fil des données depuis le serveur en nuage (302), et la première interface de communication (307) est configurée pour transmettre les données reçues au dispositif de distribution d'aérosol (100).

3. Chargeur portable (301) selon la revendication 1 ou 2, dans lequel la seconde interface de communication (309) est configurée pour échanger des données avec le serveur en nuage (302) via un réseau de longue portée et basse consommation (LPWA).

4. Chargeur portable (301) selon la revendication 3, dans lequel la seconde interface de communication (309) est configurée pour échanger des données avec le serveur en nuage via un réseau à bande étroite IoT (310).

5. Chargeur portable (301) selon l'une quelconque des revendications précédentes, dans lequel la première interface de communication (307) est configurée pour échanger sans fil des données avec le dispositif de distribution d'aérosol (100) via une technologie sans fil à courte distance.

6. Chargeur portable (301) selon l'une quelconque des revendications précédentes, dans lequel la première interface de communication (307) est configurée pour échanger des données avec le dispositif de distribution d'aérosol (100) via des premiers moyens de communication et la seconde interface de communication (309) est configurée pour échanger des données avec le serveur en nuage (302) via des seconds moyens de communication qui sont différents des premiers moyens de communication.

7. Chargeur portable (301) selon l'une quelconque des revendications précédentes, dans lequel la seconde interface de communication (309) est configurée pour avoir une portée supérieure à celle de la première interface de communication (307).

8. Chargeur portable (301) selon l'une quelconque des revendications précédentes, dans lequel la première interface de communication (307) comprend une première antenne présentant une première portée, et la seconde interface de communication (309) comprend une seconde antenne présentant une seconde portée qui est supérieure à la première portée.

9. Système de distribution d'aérosol (300), comprenant :
un dispositif de distribution d'aérosol (100) ; et
un chargeur portable (301) selon l'une quelconque des revendications précédentes, le chargeur portable (301) pouvant être connecté au dispositif de distribution d'aérosol (100) pour fournir de la puissance au dispositif de distribution d'aérosol (100),
dans lequel le dispositif de distribution d'aérosol (100) comprend une interface de communication de dispositif (124) configurée pour une connexion physique/filaire et sans fil avec le chargeur portable (301) afin d'échanger des données avec celui-ci.

10. Système de distribution d'aérosol (300) selon la revendication 9, dans lequel l'interface de communication de dispositif (124) est configurée pour échanger sans fil des données avec le chargeur portable (301) via une technologie sans fil à courte distance.

11. Système de distribution d'aérosol (300) selon la revendication 10, dans lequel le dispositif de distribution d'aérosol (100) comprend un capteur pour mesurer une condition de fonctionnement du dispositif de distribution d'aérosol (100), et l'interface de communication de dispositif (124) est configurée pour transmettre des données générées par le capteur au chargeur portable (301).

12. Système de distribution d'aérosol (300) selon la revendication 11, dans lequel le capteur est l'un d'un capteur de bouffées, d'un capteur de batterie ou d'un capteur de localisation.

13. Système de distribution d'aérosol (300) selon l'une quelconque des revendications 9 à 12, comprenant un serveur en nuage (302) configuré pour échanger des données avec le chargeur portable (301).

14. Système de distribution d'aérosol (300) selon la revendication 13, dans lequel le serveur en nuage (302) est configuré pour transmettre au chargeur portable (302) des instructions pour commander le dispositif de distribution d'aérosol (100).

15. Système de distribution d'aérosol (300) selon la revendication 14, dans lequel les instructions comprennent une ou plusieurs parmi : des instructions pour commander un accès au dispositif de distribution d'aérosol (100), des instructions pour commander une interface utilisateur du dispositif de distribution d'aérosol (100), et/ou des instructions pour commander un paramètre de fonctionnement du dispositif de distribution d'aérosol (100).
